(19)

**Europäisches Patentamt**
**European Patent Office**
**Office européen des brevets**

(11) **EP 4 571 712 A1**

(12) **EUROPEAN PATENT APPLICATION**

(43) Date of publication:
**18.06.2025 Bulletin 2025/25**

(21) Application number: **24199994.5**

(22) Date of filing: **12.09.2024**

(51) International Patent Classification (IPC):
*G08G 5/21* (2025.01)     *G08G 5/51* (2025.01)
*G08G 5/54* (2025.01)     *G08G 5/55* (2025.01)

(52) Cooperative Patent Classification (CPC):
**G08G 5/21; G08G 5/51; G08G 5/54; G08G 5/55**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.12.2023 KR 20230181269**

(71) Applicants:
• **Hyundai Motor Company**
**Seoul 06797 (KR)**
• **Kia Corporation**
**Seocho-gu**
**Seoul 06797 (KR)**

(72) Inventors:
• **RYU, Hyun Jee**
**18280 Hwaseong-si, Gyeonggido (KR)**
• **LEE, Hong Ju**
**18280 Hwaseong-si, Gyeonggido (KR)**
• **MOON, Gun Hee**
**18280 Hwaseong-si, Gyeonggido (KR)**
• **LIM, Jun Young**
**18280 Hwaseong-si, Gyeonggido (KR)**

(74) Representative: **Viering, Jentschura & Partner
mbB**
**Patent- und Rechtsanwälte**
**Am Brauhaus 8**
**01099 Dresden (DE)**

(54) **APPARATUS FOR RECOGNIZING RUNWAY USING IMAGE AND METHOD THEREFOR**

(57)     An apparatus for recognizing a runway using an image can include a camera mounted on air mobility to obtain images for an area in front of the air mobility and a processor connected with the camera. The processor can determine a flight status of the air mobility, based on flight phase information of the air mobility, obtain informa-tion a position of a runway for the air mobility from a first image obtained by the camera, in response to the flight status being an approach phase, and obtain information about a position of a centerline of the runway from a second image obtained by the camera, in response to the flight status being a ground roll phase.

**EP 4 571 712 A1**

FIG.1

Processed by Luminess, 75001 PARIS (FR)

## Description

### CROSS-REFERENCE TO RELATED APPLICATIONS

This application claims the benefit of priority to Korean Patent Application No. 10-2023-0181269, filed in the Korean Intellectual Property Office on December 13, 2023, the entire contents of which are incorporated herein by reference.

### TECHNICAL FIELD

The present disclosure relates to an apparatus for recognizing a runway using an image and a method therefor.

### BACKGROUND

Research on air mobility has been actively conducted for future traffic and transportation systems. Recently, research on air mobility in an autonomous flight scheme that does not depend on a pilot has been actively conducted. The air mobility may be divided into a rotary wing type aircraft and a fixed wing type aircraft.

The fixed wing type air mobility requires a runway for takeoff and landing and requires a technology for determining a position of the runway in a flight status to land on the runway in the autonomous flight scheme. It is common for a landing system of the air mobility to use an instrument landing system (ILS) and a global positioning system (GPS).

However, because each of all airports has the ILS, it is difficult to operate air mobility in the autonomous flight scheme in an airport without the ILS.

Furthermore, because a general landing system of the air mobility is heavily dependent on the GPS, the landing stability of the air mobility is inevitably vulnerable to an error in the GPS.

Thus, there is a need for a method for operating the air mobility in a wider place and increasing the stability of the landing system of the air mobility.

### SUMMARY

The present disclosure relates to an apparatus for recognizing a runway using an image and a method therefor, and more particularly, relates to technologies for recognizing a runway using an image obtained by air mobility.

Some embodiments of the present disclosure can solve the above-mentioned problems occurring in the prior art while advantages achieved by the prior art are maintained intact.

An embodiment of the present disclosure can provide an apparatus for recognizing a runway using an image to allow air mobility to land in an autonomous flight scheme event in a place without an instrument landing system (ILS) and a method therefor.

An embodiment of the present disclosure can provide an apparatus for recognizing a runway using an image to allow air mobility to stably touch down even in error situations of an ILS and a global positioning system (GPS) while reducing dependency on the ILS and the GPS and a method therefor.

An embodiment of the present disclosure can provide an apparatus for recognizing a runway using an image to more accurately recognize the runway without using an ILS and a GPS and a method therefor.

Technical problems to be solved by the present disclosure are not necessarily limited to the aforementioned problems, and other technical problems not mentioned herein can by solved by some embodiments, which can be understood from the following description by those skilled in the art to which the present disclosure pertains.

According to an embodiment of the present disclosure, an apparatus for recognizing a runway using an image may include a camera mounted on air mobility to obtain an image for an area in front of the air mobility and a processor connected with the camera. The processor may determine a flight status of the air mobility, based on flight phase information of the air mobility, may obtain information about a position of a runway for the air mobility from a first image obtained by the camera, in response to that the flight status is an approach phase, and may obtain information about a position of a centerline of the runway from a second image obtained by the camera, in response to the flight status is a ground roll phase.

According to an embodiment, the processor may distinguish between the approach phase and the ground roll phase on the basis of whether the air mobility touches down on the runway.

According to an embodiment, the processor may transform the first image into a first bird's eye view (BEV) image and may determine a position error of a reference point of the runway for the air mobility, based on a coordinate error between a reference projection point corresponding to coordinates onto which a camera principal point is projected on the first BEV image and the reference point of the runway.

According to an embodiment, the processor may reflect at least one of yaw, pitch, or roll of the air mobility to transform the first image into the first BEV image.

According to an embodiment, the processor may obtain principal point coordinates of the camera on a heading coordinate system and may determine a point corresponding to the principal point coordinates of the camera on the heading coordinate system as the reference projection point on the first BEV image.

According to an embodiment, the processor may obtain a projection distance between the camera and the runway along a projection direction of the camera and may obtain the principal point coordinates of the camera on the heading coordinate system, based on the projection distance and the camera principal point on an image coordinate system.

According to an embodiment, the processor may obtain a scale factor, based on an actual length of a runway starting line and a length of the runway starting line on the first BEV image, and may reflect the scale factor in the coordinate error between the reference projection point and the reference point to determine an actual distance error between an extension line in a heading direction of the air mobility and a center point of the runway starting line.

According to an embodiment, the processor may determine the center point of the runway starting line as the reference point.

According to an embodiment, the processor may classify the runway on the first image, based on segmentation.

According to an embodiment, the processor may transform the second image into a second BEV image, based on a second image processing algorithm, may extract a centerline of the runway, the centerline being included in the second BEV image, and may represent the centerline of the runway on a coordinate axis of the second BEV image.

According to an embodiment, the processor may transform the second BEV image into a hue-saturation-value (HSV) image and may extract the centerline of the runway from the HSV image.

According to an embodiment of the present disclosure, a method for recognizing a runway using an image may include determining a flight status of air mobility, based on flight phase information of the air mobility, obtaining information about a position of a runway for the air mobility from a first image obtained by a camera, in response to that the flight status is an approach phase, and obtaining information about a position of a centerline of the runway from a second image obtained by the camera, in response to the flight status is a ground roll phase.

According to an embodiment, the determining of the flight status may include distinguishing between the approach phase and the ground roll phase on the basis of whether the air mobility touches down on the runway.

According to an embodiment, the obtaining of the information about the position of the runway for the air mobility from the first image obtained by the camera may include transforming the first image into a first BEV image, determining a reference projection point corresponding to coordinates onto which a camera principal point is projected on the first BEV image, and determining a position error of a reference point of the runway for the air mobility as an actual error, based on a coordinate error between the reference projection point and the reference point of the runway.

According to an embodiment, the determining of the reference projection point onto which the camera principal point is projected on the first BEV image may include obtaining principal point coordinates of the camera on a heading coordinate system and determining a position at which the principal point coordinates of the camera on the heading coordinate system is projected onto the first BEV image as the reference projection point.

According to an embodiment, the obtaining of the principal point coordinates of the camera on the heading coordinate system may include obtaining a projection distance between the camera and the runway along a projection direction of the camera and obtaining the principal point coordinates of the camera on the heading coordinate system, based on the projection distance and the camera principal point on an image coordinate system.

According to an embodiment, the method may further include obtaining a scale factor, based on an actual length of a runway starting line and a length of the runway starting line on the first BEV image and reflecting the scale factor in the coordinate error between the reference projection point and the reference point to determine an actual distance error between an extension line in a heading direction of the air mobility and a center point of the runway starting line.

According to an embodiment, the reference point may be set to the center point of the runway starting line.

According to an embodiment, the obtaining of the information about the position of the centerline of the runway from the second image obtained by the camera may include transforming the second image into a second BEV image, extracting the centerline of the runway, the centerline being included in the second BEV image, and represent the centerline of the runway on a coordinate axis of the second BEV image.

According to an embodiment, the extracting of the centerline of the runway, the centerline being included in the second BEV image, may include transforming the second BEV image into an HSV image and extracting the centerline of the runway from the HSV image.

## BRIEF DESCRIPTION OF THE DRAWINGS

The above and other features and advantages of the present disclosure can be more apparent from the following detailed description taken in conjunction with the accompanying drawings, in which:

FIG. 1 a block diagram illustrating a configuration of an apparatus for recognizing a runway according to an embodiment of the present disclosure;

FIG. 2 is a drawing for describing a flight status, according to an embodiment of the present disclosure;

FIG. 3 is a drawing for describing an operation of a processor depending on a flight status, according to an embodiment of the present disclosure;

FIG. 4 is a drawing illustrating an apparatus for recognizing a runway according to an embodiment of the present disclosure;

FIG. 5 a flowchart for describing a method for recognizing a runway according to an embodiment of the present disclosure;

FIG. 6 is a flowchart for describing a method for recognizing a runway according to an embodiment of the present disclosure;

FIG. 7 is a drawing for describing flight phase information according to an embodiment of the present disclosure;

FIG. 8 is a drawing for describing roll, pitch, and yaw of air mobility and a camera tilting angle, according to an embodiment of the present disclosure;

FIG. 9 is a drawing for describing coordinate systems, according to an embodiment of the present disclosure;

FIG. 10 is a drawing for describing a projection distance between a camera and a runway, according to an embodiment of the present disclosure;

FIGS. 11A, 11B, and 11C are drawings for describing changes in vanishing point and vanishing line, according to an embodiment of the present disclosure;

FIGS. 12A and 12B are drawings for describing a position of a vanishing point according to pitch of air mobility, according to an embodiment of the present disclosure;

FIG. 13 is a drawing for describing a method for transforming a first image obtained by a camera into a first BEV image, according to an embodiment of the present disclosure;

FIG. 14 is a drawing illustrating a first BEV image, according to an embodiment of the present disclosure;

FIG. 15 is a drawing for schematically describing a second image processing algorithm, according to an embodiment of the present disclosure;

FIG. 16 is a drawing for describing projection transformation between an image coordinate system and a world coordinate system, according to an embodiment of the present disclosure;

FIG. 17A and 17B are drawings for describing a method for detecting a centerline of a runway, according to an embodiment of the present disclosure; and

FIG. 18 is a block diagram illustrating a computing system according to an embodiment of the present disclosure.

**DETAILED DESCRIPTION OF ILLUSTRATIVE EMBODIMENTS**

Hereinafter, some example embodiments of the present disclosure will be described in detail with reference to the example drawings. In adding reference numerals to the components of each drawing, it can be noted that identical components can be designated by identical numerals even when they are displayed on other drawings. In addition, a detailed description of well-known features or functions can be omitted to not unnecessarily obscure the gist of the present disclosure.

In the present disclosure, terms such as "first", "second", "A", "B", "(a)", "(b)", and the like, may be used. Such terms can be used merely to distinguish one element from another element, but do not necessarily limit the corresponding elements irrespective of the order or priority of the corresponding elements. Furthermore, unless otherwise defined, terms including technical and scientific terms used herein can have a same meaning as being generally understood by those skilled in the art to which the present disclosure pertains. Such terms as those defined in a generally used dictionary can be interpreted as having meanings equal to contextual meanings in the relevant field of art, and are not to be interpreted as having ideal or excessively formal meanings unless clearly defined as having such in the present application.

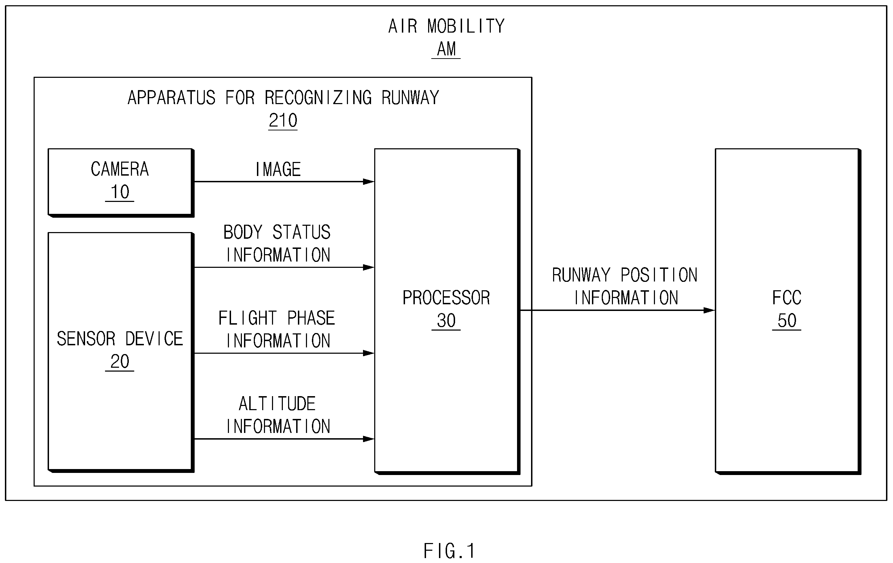

Hereinafter, some example embodiments of the present disclosure will be described in detail with reference to FIGS. 1 to 18.

FIG. 1 a block diagram illustrating a configuration of an apparatus for recognizing a runway according to an embodiment of the present disclosure.

Referring to FIG. 1, an apparatus 210 for recognizing a runway according to an embodiment of the present disclosure may include a camera 10, a sensor device 20, and a processor 30 , any combination of or all of which may be in plural or may include plural components thereof. The apparatus 210 for recognizing the runway may be to obtain information about a position of the runway. The information about the position of the runway, which can be obtained by the apparatus 210 for recognizing the runway, may be provided to a flight control computer (FCC) 50.

The camera 10 may be to obtain an image for a heading direction of an air mobility AM. For example, the camera 10 may be located at a position at which it may capture a forward direction on a lower portion of the air mobility AM. The image obtained by the camera 10 may be used in a process of determining a position of the runway.

The sensor device 20 may obtain body status information and flight phase information.

The body status information may include yaw, pitch, and roll of an airframe. To obtain the body status information, the sensor device 20 may use an acceleration sensor and a gyro sensor, for example. The acceleration sensor may be a 3-axis acceleration sensor capable of measuring acceleration of a 3-axis direction of the air mobility AM. The gyro sensor may be to measure an angular velocity of the air mobility AM and may measure an angle at which the air mobility rotates over time.

The flight phase information may be information for dividing a flight status of the air mobility AM.

The processor 30 may obtain information about a position of the runway, based on the image provided from the camera 10.

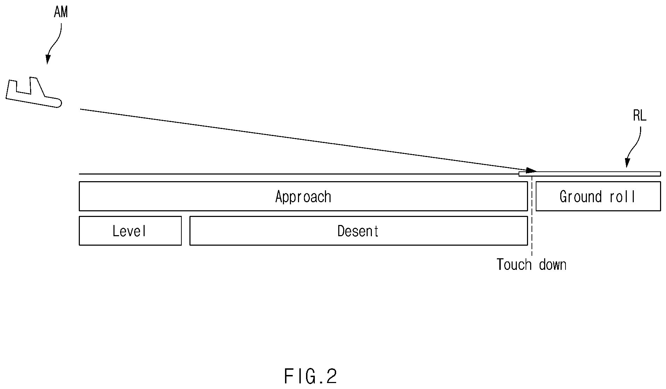

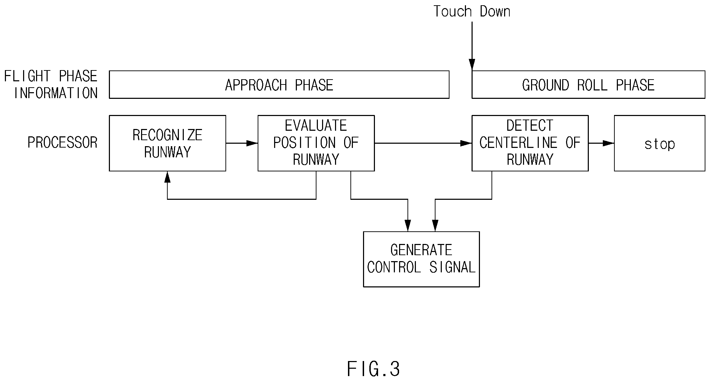

A description will be given of the method for obtaining the information about the position of the runway depending on the flight status with reference to FIGS. 2 and 3.

FIG. 2 is a drawing for describing a flight status. FIG. 3 is a drawing for describing an operation of a processor depending on a flight status.

Referring to FIG. 2, a flight status of air mobility AM may be divided into an approach phase and a ground roll phase, based on flight phase information.

The approach phase may be a phase in which the air mobility AM descends in a state in which it is close to a runway RL.

The ground roll phase may include a duration when the air mobility AM rolls out on the ground. The ground roll phase may include a timing when the air mobility AM touches down on the runway RL. A starting point of the ground roll phase may be a point at which the air mobility AM touches down or may be a point prior to the point at which the air mobility AM touches down. For example, the starting point of the ground roll phase may be determined within a range in the altitude of the air mobility AM is between 0 m and 5 m.

As shown in FIG. 3, a processor 30 may determine a flight status of the air mobility AM based on the flight phase information and may differently select an algorithm for obtaining information about a position of the runway RL depending on the flight status.

The processor 30 may use a first image processing algorithm in the approach phase and may use a second image processing algorithm in the ground roll phase.

The first image processing algorithm may recognize the runway RL from the image and may evaluate a position of the runway RL. The evaluation of the position of the runway RL may include a procedure for determining a horizontal position of the runway RL and may particularly include a procedure for obtaining a center point of a starting line of the runway RL.

The second image processing algorithm may perform a procedure for detecting a centerline of the runway RL from the image.

A description will be given in detail of the method for obtaining the information about the position of the runway in the processor 30.

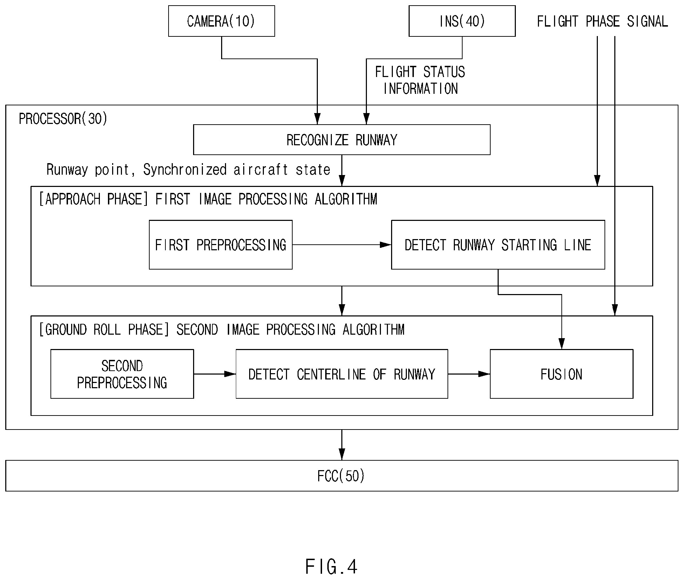

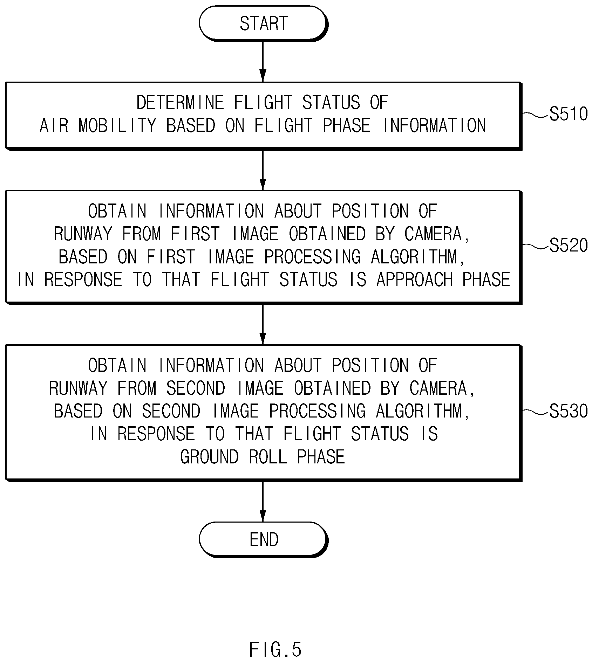

FIG. 4 is a drawing illustrating an apparatus for recognizing a runway according to an embodiment of the present disclosure. FIG. 5 a flowchart for describing a method for recognizing a runway according to an embodiment of the present disclosure. The method for recognizing the runway shown in FIG. 5 may be performed by an apparatus for recognizing a runway shown in FIGS. 1 and 4. A description will be given of a method for recognizing a runway according to an embodiment of the present disclosure with reference to FIGS. 1 to 5.

In operation S510, a processor 30 may determine a flight status of air mobility AM based on flight phase information.

The processor 30 may receive the flight phase information from a sensor device 20 and/or an FCC 50.

The flight phase information may be classified as an approach phase or a ground roll phase. The approach phase may be determined on the basis of a timing when the air mobility AM descends to land on the runway RL.

In operation S520, the processor 30 may obtain information about a position of the runway RL from a first image, based on a first image processing algorithm, in response to the flight status being the approach phase.

The first image may be obtained by a camera 10 mounted on the air mobility AM.

The first image processing algorithm may be to detect a runway from the first image and determine an actual runway position based on back projection of the image.

The first image processing algorithm may detect a runway starting line. The runway starting line may be an end of the runway RL, which can be close to a point at which the air mobility AM touches down and may refer to a line in a direction perpendicular to a direction in which the air mobility AM rolls out on the ground.

The processor 30 may detect a polygon using a mask from the first image and may determine two points at the farthest point in a lateral direction on the polygon as both end points of the runway starting line.

Because the runway starting line is able to be greatly expressed in an area on the runway RL of the first image and be well recognized, the processor 30 may increase recognition performance when obtaining runway position information based on the runway starting line.

The processor 30 may determine a relative position of the runway RL with respect to the air mobility AM on a heading coordinate system.

The processor 30 may transform the first image into a Bird's eye view (BEV) image and may determine the relative position of the runway RL with respect to the air mobility AM on the heading coordinate system, based on a position deviation between an image center, which can be the center of the BEV image, and based on a center point corresponding to the center of the runway starting line.

The processor 30 may transform the first image into the first BEV image and may determine the relative position of the runway RL based on the first BEV image. The relative position of the runway RL may be determined based on a coordinate error between a reference projection point onto which a principal point of the camera 10 is projected on the first BEV image and a reference point of the runway RL. The reference projection point may be coordinates on the first BEV image, which correspond to principal point coordinates of the camera 10, which are obtained on the heading coordinate system. The reference point of the runway RL may be a center point of the runway starting line.

The processor 30 may obtain a projection distance between the camera 10 and the runway RL along a projection direction of the camera 10 and may obtain the principal point coordinates of the camera 10 on the heading coordinate system based on the projection distance and the camera principal point on an image coordinate system.

The processor 30 may reflect a scale factor in the coordinate error between the reference projection point of the camera principal point and the reference point on the first BEV image and may determine an actual distance error between an extension line in a heading direction of the air mobility AM and the center point of the runway starting line. The reference point may be set to the center point of the starting line of the runway RL. The scale factor may be obtained based on an actual length of the runway starting line and a length of the runway starting line on the first BEV image.

Furthermore, the processor 30 may reflect body status information of the air mobility AM in the process of transforming the first image into the first BEV image. The body status information may include yaw, pitch, roll, or any combination thereof, of the air mobility AM. The processor 30 may receive information about yaw, pitch, and roll of the air mobility AM from an inertial navigation system (INS) 40.

In operation S530, the processor 30 may obtain information about a position of the runway from the second image, based on a second image processing algorithm, in response to the flight status being the ground roll phase.

The second image may be an image obtained by the camera 10, which can be the same as the first image.

The second image processing algorithm may be to recognize a centerline of the runway RL from the second image and determine a lateral relative position of the runway RL.

The processor 30 may transform the second image into a second BEV image, based on the second image processing algorithm. The processor 30 may extract a centerline of the runway RL included in the second BEV image and may represent the centerline of the runway RL as a straight line equation on a coordinate axis of the second BEV image.

The centerline of the runway RL may refer to a straight line formed along a direction in which the air mobility AM rolls out on the ground. The processor 30 may transform the second BEV image into a hue-saturation-value (HSV) image and may extract the centerline of the runway RL from the HSV image.

The FCC 50 may control the air mobility AM based on the runway position information, and for example, may control a motor, a transmission, or the like.

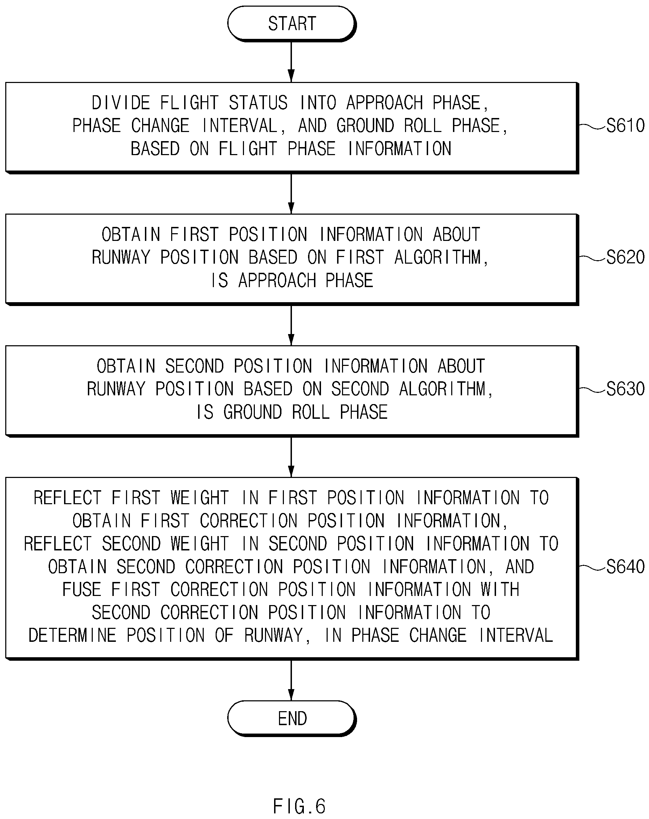

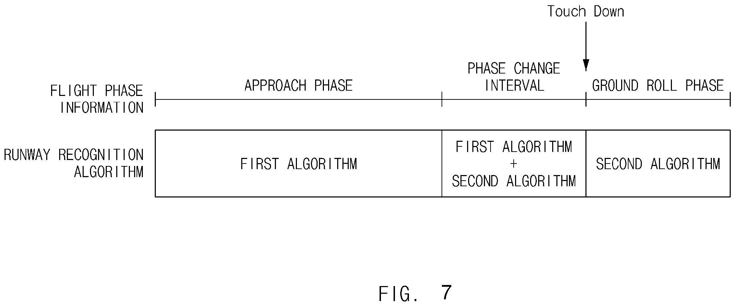

FIG. 6 is a flowchart for describing a method for recognizing a runway according to an embodiment of the present disclosure. FIG. 7 is a drawing for describing flight phase information according to an embodiment of the present disclosure.

A description will be given below of a method for recognizing a runway according to an embodiment of the present disclosure with reference to FIGS. 6 to 7.

In operation S610, a processor 30 may divide a flight status into an approach phase, a phase change interval, and a ground roll phase, based on flight phase information.

The approach phase may be a phase in which air mobility AM descends in a state in which it is close to a runway RL.

The phase change interval may be an interval that changes from the approach phase to the ground roll phase. An end point of the phase change interval may correspond to a starting point of the ground roll phase. For example, the phase change interval may be determined within a range in which the altitude of the air mobility AM is between 0 m and 5 m. A starting point of the phase change interval may be determined on the basis of an altitude and may be set to an altitude 5m to 10m higher than the end point of the phase change interval.

The ground roll phase may include a duration when the air mobility AM rolls out on the ground. The starting point of the ground roll phase may be a point at which the air mobility AM touches down or a point prior to the point at which the air mobility AM touches down.

In operation S620, the processor 30 may obtain first position information about a runway position based on a first algorithm, in response to the flight status being the approach phase.

The first algorithm may use, but is not limited to, a first image processing algorithm shown in FIG. 4.

The first position information may include a center point of a runway starting line.

In operation S630, the processor 30 may obtain second position information about a runway position based on a second algorithm, in response to the flight status being the ground roll phase.

The second algorithm may use, but is not limited to, a second image processing algorithm shown in FIG. 4.

The second position information may include information about the centerline of the runway, and the information about the centerline of the runway may include a center point of the runway starting line.

In operation S640, the processor 30 may obtain information about a position of the runway RL using the first algorithm and the second algorithm, in response to the flight status being the phase change interval. In the phase change interval, the processor 30 may reflect a first weight in first position information obtained using the first algorithm to obtain first correction position information.

The closer the air mobility AM is to the end point of the phase change interval, the smaller the processor 30 may set the first weight to be and the larger the processor 30 may set a second weight to be.

The first weight and the second weight may be determined based on an altitude of the air mobility AM. For example, the lower the altitude of the air mobility AM, the smaller the first weight may be set to be and the larger the second weight may be set to be.

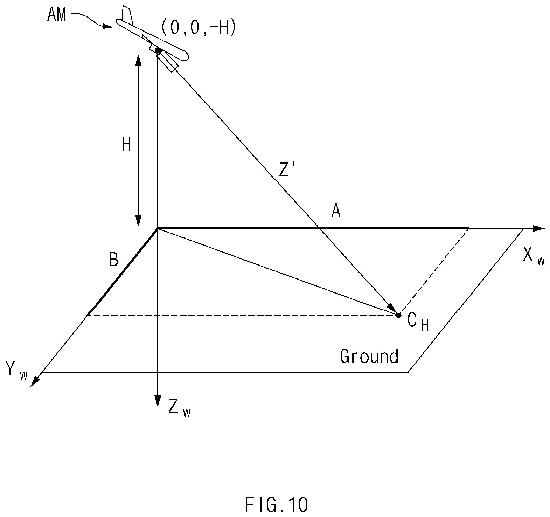

The first weight and the second weight may be determined based on a distance between the air mobility AM and the runway RL. For example, the closer the distance between the air mobility AM and the run RL, the smaller the first weight may be set to be and the larger the second weight may be set to be. As shown in FIG. 10 described below, the distance between the air mobility AM and the runway RL may be determined based on a distance Z' between a projection point $C_H$ at which the principal point of the camera 10 is projected onto a heading coordinate system and a camera principal point.

The sum of the first weight and the second weight may be "1". For example, when the first weight is W1 and when the second weight is W2, W2 may be set as 1-W1.

A description will be given of an embodiment of determining the first weight W1 and the second weight W2 based on the altitude of the air mobility AM. When the phase change interval is between altitude h1 and altitude ho, the first weight W1 may be obtained based on Equation 1 below.

[Equation 1]

$$W1 = \frac{h - h0}{h1 - h0}$$

In Equation 1 above, h may be the altitude of the air mobility AM. h0 may be the altitude of the end point in the phase change interval, and h1 may be the altitude of the starting point in the phase change interval. h may be the altitude of the air mobility AM. For example, when ho is set to 5 m and h1 is set to 10 m, the first weight W1 may be calculated as (h-5)/5 according to the altitude h of the air mobility AM. Thus, when the altitude h of the air mobility AM is 10 m, the first weight W1 may be calculated as "1" and the second weight W2 may be calculated as "o". Similarly, when the altitude h of the air mobility AM is 8 m, the first weight W1 may be calculated as "0.6" and the second weight W2 may be calculated as "0.4". Furthermore, when the altitude h of the air mobility AM is 5 m, the first weight W1 may be calculated as "o" and the second weight W2 may be calculated as "1".

The processor 30 may multiply the first position information by the first weight W1 to obtain the first correction position information and may multiply the second position information by the second weight W2 to obtain the second correction position information.

The processor 30 may fuse the first correction position information with the second correction position information to obtain information for a position of the runway RL. For example, the processor 30 may add the first correction position information and the second correction position information to obtain information about a position of the runway RL.

The first position information may be coordinates of a center point of a runway starting line. The second position information may be a centerline of the runway RL and may include coordinates of the center point of the runway starting line.

When the first position information includes (x1, y1) and the second position information includes (x2, y2), the processor 30 may obtain information about a position of a runway as (x1 × W1 + x2 × W2, y1 × W1 + y2 × W2) in the phase change interval.

Hereinafter, a description will be given of a detailed embodiment for respective procedures.

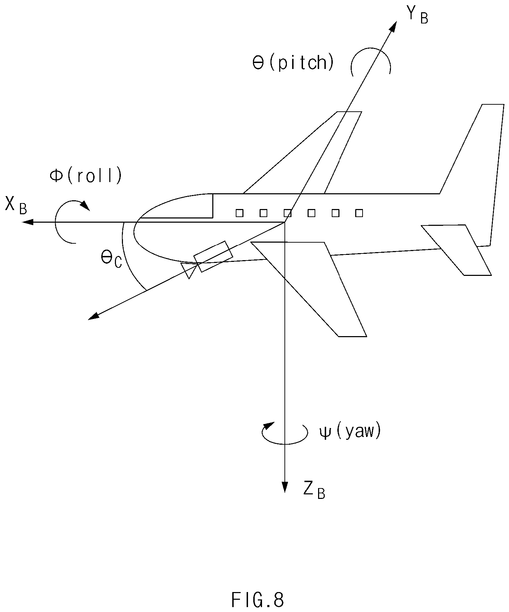

A description will be given below of a method for recognizing a runway based on the first image processing algorithm with reference to FIGS. 8 to 14.

The first image processing algorithm may be to obtain information about a position of the runway RL based on a first image obtained from the sky by the air mobility AM. The first image processing algorithm may use coordinate transformation for an image coordinate system to which the first image belongs. The coordinate transformation of the image coordinate system may be performed based on Euler angles including roll, pitch, and yaw of the air mobility AM.

FIG. 8 is a drawing for describing roll, pitch, and yaw of air mobility and a camera tilting angle. An $X_B$-axis, a $Y_B$-axis, and a $Z_B$-axis may be three axes for defining a body coordinate system of air mobility AM. The $X_B$-axis may be a longitudinal axis of the air mobility AM, and the $Y_B$-axis may be a lateral axis of the air mobility AM. The $Z_B$-axis may be a vertical axis of the air mobility AM.

Referring to FIG. 8, roll $\phi$ of the air mobility AM may refer to a rotational angle around the $X_B$-axis and pitch $\theta$ of the air mobility AM may refer to a rotational angle around $Y_B$-axis. Furthermore, yaw $\psi$ of the air mobility AM may refer to a rotational angle around the $Z_B$-axis.

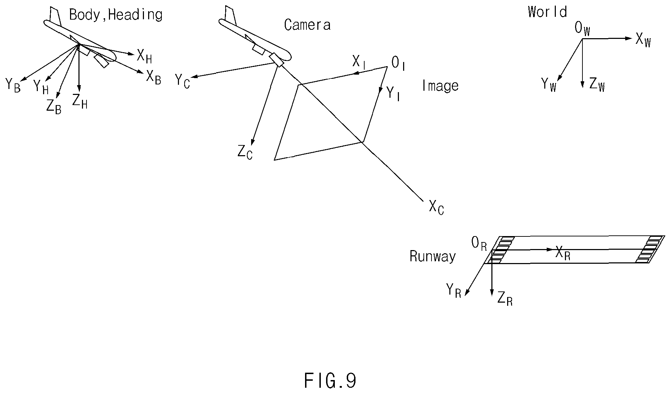

FIG. 9 is a drawing for describing coordinate systems.

A description will be given below of a coordinate system used in an embodiment of the present disclosure with reference to FIG. 9.

A body coordinate system may refer to a coordinate system fixed to air mobility AM and may be a 3-axis coordinate system including an $X_B$-axis, a $Y_B$-axis, and a $Z_B$-axis. The $X_B$-axis may refer to a heading direction of the air mobility AM, the $Y_B$-axis may refer to a wing direction of the air mobility AM, and the $Z_B$-axis may refer to a lower direction of the air mobility AM. The body coordinate system may be obtained using Euler angles $\phi$, $\theta$, and $\psi$ of the air mobility AM on a world coordinate system.

The heading coordinate system may be a coordinate system that rotates by the yaw angle $\psi$ of the air mobility AM on the world coordinate system.

An image coordinate system may be a two-dimensional (2D) coordinate system of an image obtained by the camera 10 and may include an $X_I$-axis and $Y_I$-axis around the origin $O_I$ of a right upper end.

A camera coordinate system may be a 3-axis coordinate system including an $X_C$-axis, a Yc-axis, and a Zc-axis and may be obtained using a camera calibration matrix K on the image coordinate system.

A runway coordinate system may refer to a coordinate system for control of an airframe and may be a 3-axis coordinate system including an $X_R$-axis, a $Y_R$-axis, and a $Z_R$-axis. The runway coordinate system may be a coordinate system that rotates by a yaw angle $\psi_r$ of the runway on the world coordinate system.

The world coordinate system may be a 3-axis coordinate system defined as the origin OW and an $X_C$-axis, a $Y_C$-axis, and a Zc-axis and may be a north-east-down (NED) coordinate system.

FIG. 10 is a drawing for describing a projection distance between a camera and a runway.

A projection distance between a camera 10 and a runway RL may refer to a distance to a projection point $C_H$ at which a principal point of the camera 10 is projected onto a heading coordinate system. A description will be given below of a method for calculating a distance between the principal point of the camera 10 and a camera principal point projected onto a world coordinate system with reference to FIG. 10.

When a basic vector on the world coordinate system is defined as $\{\hat{x}_w, \hat{y}_w, \text{and } \hat{z}_w\}$, when a basic vector on a body coordinate system is defined as $\{\hat{x}_b, \hat{y}_b, \text{and } \hat{z}_b\}$, and when a basic vector on a camera coordinate system is defined as $\{\hat{x}_c, \hat{y}_c, \text{and } \hat{z}_c\}$, relationships, such as Equations 2 to 4, may be established between the respective basic vectors.

[Equation 2]

$$\begin{bmatrix}\hat{x}_b\\\hat{y}_b\\\hat{z}_b\end{bmatrix} = Rx(\phi)Ry(\theta)Rz(\psi) \cdot \begin{bmatrix}\hat{x}_w\\\hat{y}_w\\\hat{z}_w\end{bmatrix} =$$

$$\begin{bmatrix}1 & 0 & 0\\0 & \cos\phi & \sin\phi\\0 & -\sin\phi & \cos\phi\end{bmatrix} \cdot \begin{bmatrix}\cos\theta & 0 & -\sin\theta\\0 & 1 & 0\\\sin\theta & 0 & \cos\theta\end{bmatrix} \cdot \begin{bmatrix}\cos\psi & \sin\psi & 0\\-\sin\psi & \cos\psi & 0\\0 & 0 & 1\end{bmatrix}\begin{bmatrix}\hat{x}_w\\\hat{y}_w\\\hat{z}_w\end{bmatrix}$$

[Equation 3]

$$\begin{bmatrix}\hat{x}_c\\\hat{y}_c\\\hat{z}_c\end{bmatrix} = Ry(\theta_c) \cdot \begin{bmatrix}\hat{x}_b\\\hat{y}_b\\\hat{z}_b\end{bmatrix} = \begin{bmatrix}\cos\theta_c & 0 & -\sin\theta_c\\0 & 1 & 0\\\sin\theta_c & 0 & \cos\theta_c\end{bmatrix} \cdot \begin{bmatrix}\hat{x}_b\\\hat{y}_b\\\hat{z}_b\end{bmatrix}$$

[Equation 4]

$$\begin{bmatrix}\hat{x}_c\\\hat{y}_c\\\hat{z}_c\end{bmatrix} = Ry(\theta_c) \cdot \begin{bmatrix}\hat{x}_b\\\hat{y}_b\\\hat{z}_b\end{bmatrix} = \begin{bmatrix}\cos\theta_c & 0 & -\sin\theta_c\\0 & 1 & 0\\\sin\theta_c & 0 & \cos\theta_c\end{bmatrix} \cdot \begin{bmatrix}\hat{x}_b\\\hat{y}_b\\\hat{z}_b\end{bmatrix}$$

In Equations 2 to 4 above, $R_X$, $R_Y$, and $R_Z$ may be a rotational matrix using Euler angles.

A distance Z' between a point $C_H$ at which a camera principal point is projected onto a heading coordinate system and the camera principal point may be represented as Equation 5 below by a relationship between the world coordinate system and the camera coordinate system.

[Equation 5]

$$z'\hat{x}_c = z'(r11\hat{x}_w + r12\hat{y}_w + r13\hat{z}_w) = A\hat{x}_w + B\hat{y}_w - H\hat{z}_w$$

As shown in FIG. 10, the distance Z' between the projection point $C_H$ at which the camera principal point is projected onto the heading coordinate system and the camera principal point may be organized as Equation 6 below by a relationship among vector A, vector B, and vector z'.

[Equation 6]

$$z' = \frac{H}{r13} = \frac{H}{\sin\theta \cdot \cos\theta_c + \cos\phi \cdot \cos\theta \cdot \sin\theta_c}$$

A description will be given below of a method for obtaining 3D coordinates of the camera principal point.

Hereinafter, in the specification, $R_A^B$ may be the rotational matrix for transforming a vector from frame A to frame B, and $t_A^B$ may be the translation matrix indicating frame A as frame B.

A relationship, such as Equation 7 below, between any first reference point $(\hat{x}_i, \hat{y}_i)$ on an image coordinate system and a second reference point $(\hat{x}_c, \hat{y}_c, \hat{z}_c)$ on the camera coordinate system, which can correspond to the first reference point, may be established.

[Equation 7]

$$\lambda \begin{bmatrix} \hat{x}_i \\ \hat{y}_i \\ 1 \end{bmatrix} = \begin{bmatrix} f_x & 0 & c_y \\ 0 & f_y & c_y \\ 0 & 0 & 1 \end{bmatrix} \begin{bmatrix} ri11 & ri12 & ri13 & t1 \\ ri21 & ri22 & ri23 & t2 \\ ri31 & ri32 & ri33 & t3 \end{bmatrix} \begin{bmatrix} \hat{x}_c \\ \hat{y}_c \\ \hat{z}_c \\ 1 \end{bmatrix}$$

$$= K\left[R_i^c | t_i\right] \begin{bmatrix} \hat{x}_c \\ \hat{y}_c \\ \hat{z}_c \\ 1 \end{bmatrix}$$

$$= K R_i^c \begin{bmatrix} \hat{x}_c \\ \hat{y}_c \\ \hat{z}_c \\ 1 \end{bmatrix}$$

In Equation 7 above, K may be the intrinsic parameter of the camera.

A rotational matrix $R_i^C$ of the image coordinate system and the camera coordinate system may be represented as Equation 8 below.

[Equation 8]

$$R_i^c = Rx\left(-\frac{\pi}{2}\right) Ry\left(-\frac{\pi}{2}\right)$$

The 3D coordinates of the principal point of the camera may be obtained as Equation 9 below.

[Equation 9]

$$z'\left[C_I^T | 1\right]^T = K R_i^c Cc = K R_i^c \left[R_B^C | t_B^C\right] \left[c_B^T | 1\right]^T = K R_i^c \left(R_B^C C_B + t_B^C\right)$$

In Equation 9 above, Ci may refer to the camera principal point on the image coordinate system, Cc may refer to the coordinates corresponding to the camera principal point on the camera coordinate system, and $C_B$ may refer to the coordinates corresponding to the camera principal point on the body coordinate system. $C_H$ may refer to the coordinates corresponding to the camera principal point on the heading coordinate system.

When there is no transformation by the translation matrix between the body coordinate system and the heading coordinate system and when there is no rotation transformation by roll and pitch, the coordinates of the camera principal point on the heading coordinate system may be represented as Equation 10 below.

[Equation 10]

$$C_H = Ry(\theta)^{-1} Rx(\phi)^{-1} C_B$$

$$= R_B^H C_B$$

When substituting [Equation 10] above into [Equation 9] above, the coordinates of the camera principal point on the heading coordinate system may be represented as Equation 11 below.

[Equation 11]

$$C_H = R_B^H R_C^B \left( R_c^i K^{-1} (z'[C_I^T|1]^{-T}) - t_B^C \right)$$

A processor 30 may transform pixels of a first image into a first BEV image using the translation matrix. The translation matrix may be obtained using a translation matrix generation function. Source points of the first image may be used to obtain the translation matrix. Coordinates of the source points may be corrected by reflecting yaw, pitch, and roll of air mobility AM.

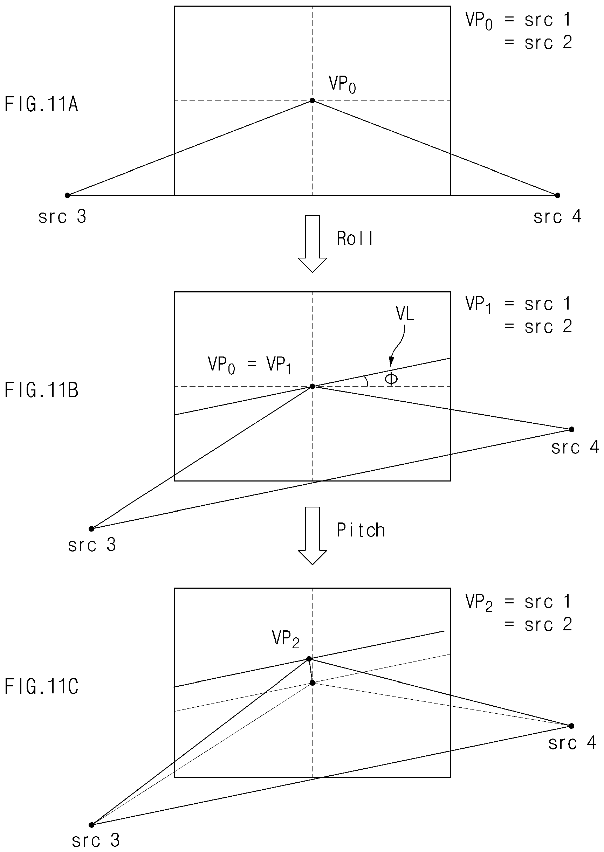

A description will be given below of a method for obtaining a translation matrix for transforming the first image into the first BEV image with reference to FIGS. 11 to 13.

FIGS. 11A to 11C are drawings for describing changes in vanishing point and vanishing line.

FIG. 11A is a drawing illustrating a vanishing point and a vanishing line in a state in which there are no roll and pitch. FIG. 11B is a drawing for describing changes in vanishing point and vanishing line depending on roll of air mobility. FIG. 11C is a drawing for describing a vanishing point and a vanishing line depending on pitch of air mobility.

First to fourth source points src1 to src4 in FIG. 11A may be reference points used in a process of obtaining a BEV image. FIG. 11A illustrates that the first source point src1 and the second source point src2 are identical to a vanishing point $VP_0$. The vanishing point $VP_0$ may be a principal point of an image. The third source point src3 and the fourth source point src4 may be points at both ends on the front of a first image.

As shown in FIG. 11B, it may be seen that the vanishing point $VP_0$ when there is no roll and the vanishing point $VP_0$ when roll is generated are the same as each other. A vanishing line VL may vary with roll $\phi$.

As shown in FIG. 11C, the vanishing line VL may be changed by pitch.

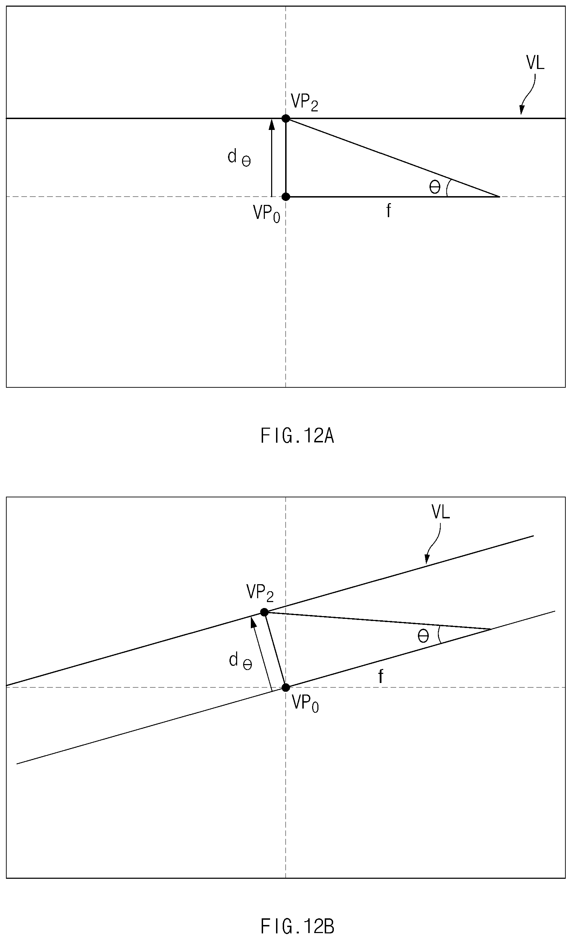

FIGS. 12A and 12B are drawings for describing a position of a vanishing point according to pitch of air mobility. FIG. 12A is a drawing for describing a state in which roll is 0 (zero). FIG. 12B is a drawing for describing a state in which roll is not 0 (zero).

Referring to FIG. 12A, when there is no roll of air mobility AM, a y-coordinate $V_y$ of a vanishing line VL on an image, a camera principal point $(C_x, C_y)$, and a camera tilt angle $\theta_{tilt}$ on a world coordinate system may be represented as a relationship such as Equation 12 below. The camera tilt angle $\theta_{tilt}$ may be an angle between an xy plane of a world coordinate system and a camera 10. The camera tilt angle $\theta_{tilt}$ on the world coordinate system may be represented as "$\theta + \theta c$". $\theta$ may be pitch of the air mobility AM. $\theta c$ may refer to a camera tilt on a body coordinate system and may refer to an angle between an xy plane on a body coordinate system and the camera 10.

[Equation 12]

$$\theta_{tilt} = tan^{-1} \frac{v_y - c_y}{f_y}$$

In Equation 12 above, $f_y$ may refer to the focal length of the camera in the y-axis direction.

Referring to FIG. 12B, when there is roll of the air mobility AM, a vanishing line VL may move perpendicular to the roll depending on the pitch $\theta$.

When the vertical distance between a principal point VP0 of the image and the vanishing line VL is de, a tilt angle $\theta_{tilt}$ of the camera 10 may be represented as Equation 13 below.

[Equation 13]

$$\theta_{tilt} = tan^{-1} \frac{d_\theta}{f} \left( f = \frac{f_x - f_y}{2} \right)$$

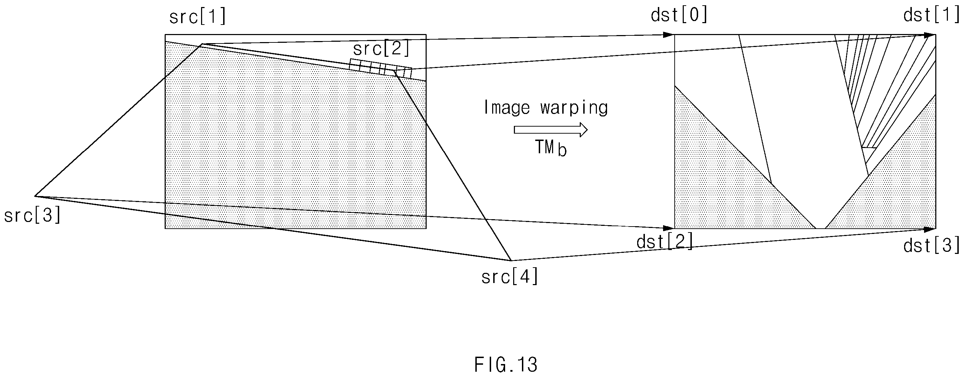

FIG. 13 is a drawing for describing a method for transforming a first image obtained by a camera into a first BEV image.

Referring to FIG. 13, the first image obtained by the camera may be transformed into the first BEV image using a translation matrix TMb.

The translation matrix TMb may be obtained using a translation matrix generation function. For example, first to fourth source points src1 to src4 may be provided as inputs of "OpenCV getPerspectiveTransform function" to generate the translation matrix TMb.

The first to fourth source points src1 to src4 shown in FIG. 13 may be coordinates obtained by reflecting reference points obtained in a state in which there are no yaw, pitch, and roll of air mobility AM in yaw, pitch, and roll of the air mobility AM.

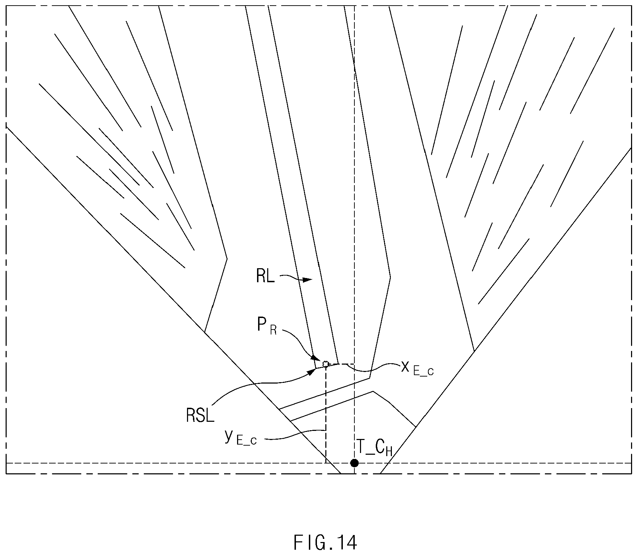

FIG. 14 is a drawing illustrating a first BEV image.

A description will be given below of a method for determining a relative position of a runway with respect to air mobility with reference to FIG. 14.

Referring to FIG. 14, a coordinate error may refer to a coordinate error between a reference projection point $T\_C_H$ and a reference point $X_{E\_C}$ of a runway RL. The reference projection point $T\_C_H$ may be coordinates in which principal point coordinates of a camera 10 on a heading coordinate system are projected onto a first BEV image. The reference point $X_{E\_C}$ of the runway RL may be a center point of a runway starting line RSL. The runway starting line RSL may refer to a line close to a point at which air mobility AM touches down among ends of the runway RL.

The coordinate error may include an x-error $x_E$ and a y-error $y_E$. The x-error $x_E$ may indicate an x-coordinate difference between the reference projection point $T\_C_H$ and the reference point $X_{E\_C}$ of the runway RL. The y-error $y_E$ may indicate a y-coordinate difference between the reference projection point $T\_C_H$ and the reference point $X_{E\_C}$ of the runway RL.

When coordinates of both ends of a runway starting line on the first BEV image are $(u_1, v_1)$ and $(u_2, v_2)$, respectively, each of the x-error $x_E$ and the y-error $y_E$ may be obtained using Equation 14 below.

[Equation 14]

$$\mathrm{x}_E = \frac{u_1 - u_2}{2} - u_c$$

$$y_E = \frac{v_1 - v_2}{2} - v_c$$

A processor 30 may calculate an actual error $(X_E, Y_E)$, based on the x-error $x_E$ and the y-error $y_E$. The actual error $(X_E, Y_E)$ may be obtained by multiplying a coordinate error $(x_E, y_E)$ by a scale factor Ks. The scale factor Ks may be obtained based on a distance w between coordinates $(u_1, v_1)$ and coordinates $(u_2, v_2)$ and an actual length of the runway starting line RSL. When the actual length of the runway starting line RSL is $W_R$, the scale factor Ks may be obtained by dividing $W_R$ by w.

As a result, a center point $P_H$ of the runway starting line RSL for the air mobility AM on a heading coordinate system may be represented as Equation 15 below.

[Equation 15]

$$P_H \begin{bmatrix} C_{Hx} + X_E \\ C_{Hy} + Y_E \\ C_{Hz} \end{bmatrix}$$

In Equation 15 above, $C_{Hx}$ may refer to the x-coordinate of the camera principal point on the heading coordinate system, and $C_{Hy}$ may refer to the y-coordinate of the camera principal point on the heading coordinate system.

As in Equation 16 below, the center point $P_R$ of the runway starting line RSL on the runway coordinate system may be obtained using the rotational matrix RH and the center point $P_H$ of the runway starting line RSL on the heading coordinate system.

[Equation 16]

$$R_H^R = Rz(\psi_r - \psi)Ry(\theta = 0)Rx(\phi = 0)$$

$$= \begin{bmatrix} \cos(\psi_r - \psi) & \sin(\psi_r - \psi) & 0 \\ -\sin(\psi_r - \psi) & \cos(\psi_r - \psi) & 0 \\ 0 & 0 & 1 \end{bmatrix}$$

$$P_R = R_H^R \cdot P_H$$

The processor 30 may obtain the center point $P_R$ of the runway starting line RSL on the runway coordinate system, based on a first image processing algorithm. The center point $P_R$ of the runway starting line RSL on the runway coordinate system may be first position information described with reference to FIG. 6.

Furthermore, the processor 30 may remove noise of the first position information using a filter. For example, the processor 30 may increase the reliability of the first position information, using a Kalman filter.

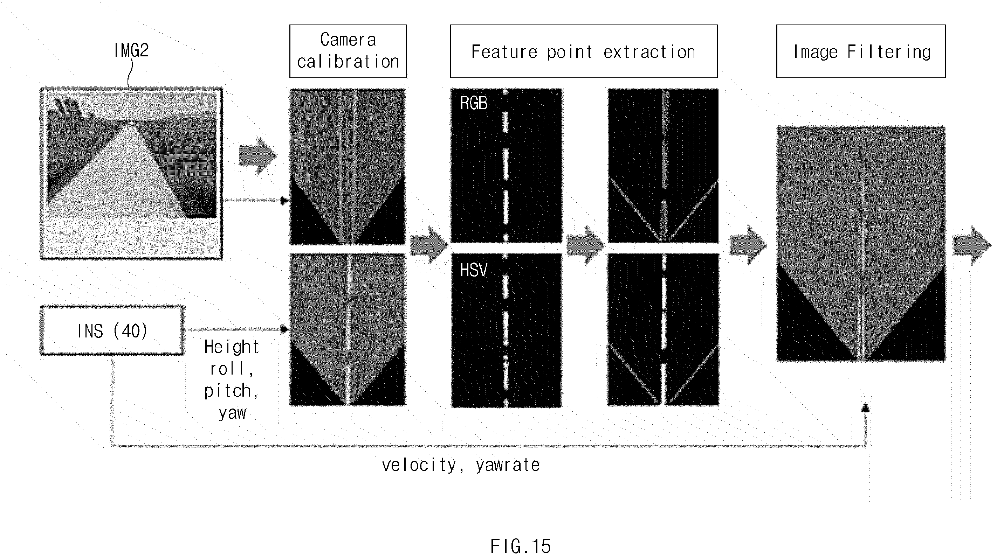

FIGS. 15 to 17 are drawings for describing a second image processing algorithm.

FIG. 15 is a drawing for schematically describing a second image processing algorithm.

Referring to FIG. 15, a processor 30 may receive a second image IMG2 and may perform camera calibration, feature point extraction, and image filtering for the second image IMG2.

The processor 30 may perform the camera calibration for coordinate transformation of the second image IMG2 obtained by a camera 10.

The processor 30 may transform the second image IMG2, the camera calibration of which is performed, into a second BEV image. The second BEV image may be an RGB image.

The processor 30 may transform the second BEV image IMG2 in RGB format into an HSV image.

The processor 30 may extract a feature point of a runway RL from the HSV image. For example, the processor 30 may extract a centerline of the runway RL from the HSV image.

A description will be given below of a detailed procedure of the second image processing algorithm.

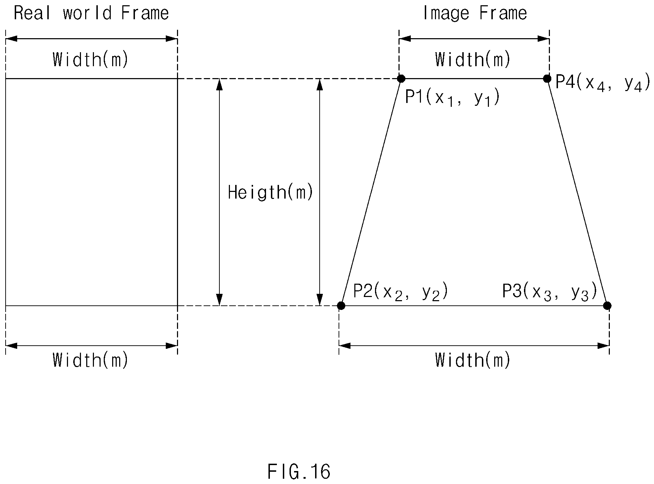

FIG. 16 is a drawing for describing projection transformation between an image coordinate system and a world coordinate system.

Referring to FIG. 16, a processor 30 may match reference points P1, P2, P3, and P4 of the image coordinate system with the world coordinate system.

Because the altitude of air mobility AM is "0" or is very low, a second image processing algorithm may fail to consider the altitude of the air mobility AM in a process of transforming a coordinate system of a second image. A horizontal coordinate and a vertical coordinate on an image may correspond to an x-coordinate and a y-coordinate, respectively.

The reference points P1, P2, P3, and P4 on the image may be transformed into (X, Y) coordinates of the world coordinate system based on Equation 17 below.

[Equation 17]

$$\begin{bmatrix} X \\ Y \\ w \end{bmatrix} = \begin{bmatrix} p11 & p12 & p13 \\ p21 & p22 & p23 \\ p31 & p32 & p33 \end{bmatrix} \cdot \begin{bmatrix} x \\ y \\ 1 \end{bmatrix}$$

In Equation 17 above, w may be the proportional constant and may be represented as $(p_{31}x + p_{32}y + p_{33})$.

Furthermore, the processor 30 may use actual information about any subject on the image to allow pixel units to correspond to meter units on the world coordinate system.

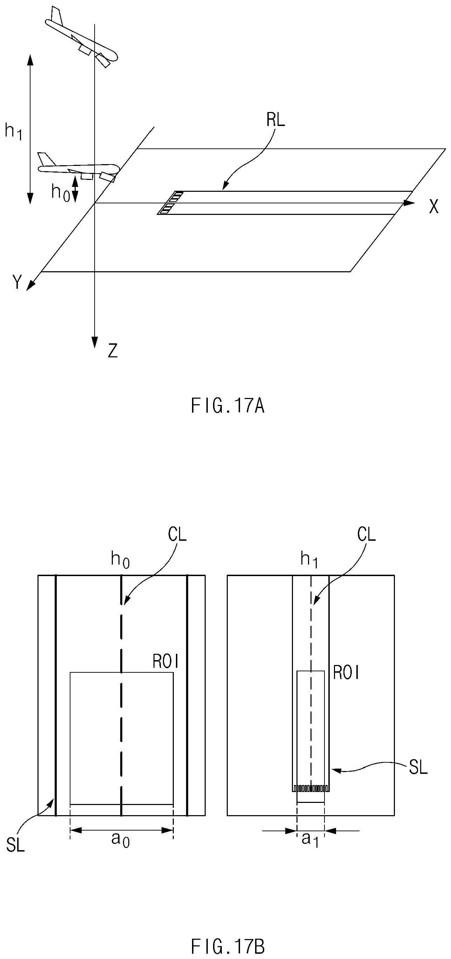

FIG. 17A and 17B are drawings for describing a method for detecting a centerline of a runway. FIG. 17A is a drawing for describing an altitude of air mobility. FIG. 17B is a drawing for describing a region of interest (ROI) according to an altitude of air mobility.

Referring to FIGs. 17A and 17B, the ROI may be a region specified to detect a centerline CL of a runway RL. Because the centerline CL of the runway RL is able to be recognized as being very small on a second image, a more precisely performed image recognition for a region in which the centerline CL is able to be detected may be performed. A processor 30 may set an ROI and may detect a feature point for the centerline CL of the runway RL from the ROI.

The size of the ROI may be set to exclude another object capable of being confused with the centerline CL of the runway RL. For example, the size of the ROI may be set to a size at which side lines SL of the runway RL are not detected. Thus, the size of the ROI may be set to another size according to the altitude of the air mobility AM.

According to an embodiment, the higher the altitude of the air mobility AM, the smaller the ROI may be set to be. The lower the altitude of the air mobility AM, the larger the ROI may be set to be. For example, as shown in FIG. 17B, when the altitude of the air mobility AM is h0, the processor 30 may set an ROI with the width of a0. Furthermore, as shown in FIG. 17B, when the altitude of the air mobility AM is h1, the processor 30 may set an ROI with the width of a1.

After detecting the centerline CL of the runway RL, the processor 30 may output information about a position of the centerline CL. The information about the position of the centerline CL may be second position information. Alternatively, the information about the position of the centerline CL may be a point at which the centerline CL of the runway RL starts in a runway starting line.

According to an embodiment, as in Equation 18 below, the processor 30 may represent a position of the runway centerline CL as a linear equation.

[Equation 18]

$$l = n(mh + b - \frac{w}{2})$$

In Equation 18 above, $l$ may be the error between the runway centerline CL and the center line of the HSV image. The center line of the HSV image may be a vertical line parallel to an x-axis on a world coordinate system. $l$ may be the metric indicating the horizontal error between the air mobility AM and the runway centerline CL and may be output in m units.

n may be the proportional constant for transforming the distance between pixels on the HSV image into m units.

w may be the width of the HSV image, and h may be the height of the HSV image.

b may refer to the error between the runway centerline CL on the HSV image and the center line of the HSV image.

m may refer to the slop and may be calculated as a tangent for an angle s between the center line of the HSV image and the runway centerline CL as in Equation 19 below.

[Equation 19]

$$s = tan^{-1}(m)$$

The information about the position of the runway RL, which is obtained using the above-mentioned method, may be used in a process of generating a control signal of the air mobility AM.

For example, a center point of the runway starting line, which can be obtained based on a first image processing algorithm, may be used to determine a touchdown position of the air mobility AM.

A lateral relative distance of the runway RL, which can be obtained based on a second image processing algorithm before touchdown, may be used to determine a touchdown position. Furthermore, a slope of the runway centerline CL, which can be obtained based on the second image processing algorithm after the touchdown, may be used in a process of generating a control command for ground roll of the air mobility AM.

The control signal of the air mobility AM may include a control signal for controlling ailerons and a control signal for controlling a rudder and a steering device.

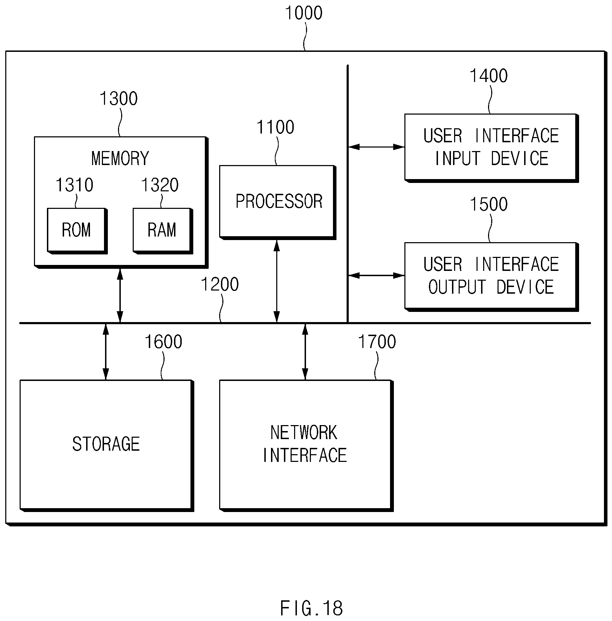

FIG. 18 illustrates a computing system according to an embodiment of the present disclosure.

Referring to FIG. 18, a computing system 1000 may include at least one processor 1100, a memory 1300, a user interface input device 1400, a user interface output device 1500, a storage 1600, and a network interface 1700, which are connected with each other via a bus 1200, any combination of or all of which may be in plural or may include plural components thereof.

The processor 1100 may be a central processing unit (CPU) or a semiconductor device that processes instructions stored in the memory 1300 and/or the storage 1600. A storage medium may include the memory 1300 and the storage 1600, which may include various types of volatile or non-volatile storage media. For example, the memory 1300 may include a read only memory (ROM) 1310 and a random access memory (RAM) 1320.

Accordingly, the operations of the method or algorithm described in connection with the embodiments disclosed in the specification may be directly implemented with a hardware module, a software module, or a combination of the hardware module and the software module, which can be executed by the processor 1100. The software module may reside on a storage medium (that is, the memory 1300 and/or the storage 1600) such as a RAM, a flash memory, a ROM, an EPROM, an EEPROM, a register, a hard disc, a removable disk, and a CD-ROM.

The example storage medium may be coupled to the processor 1100. The processor 1100 may read out information from the storage medium and may write information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components. For the processor 1100, one or more processors can be together and/or remote.

According to an embodiment, the apparatus for recognizing the runway may determine a position of a runway without using an instrument landing system (ILS) and a global positioning system (GPS), thus guiding air mobility to land even in an airport without the ILS.

Furthermore, according to an embodiment, the apparatus for recognizing the runway may recognize the runway based on the image, thus allowing the air mobility to touch down even in error situations of the ILS and the GPS.

Furthermore, according to an embodiment, the apparatus for recognizing the runway may differently use an image processing algorithm depending on a position or an altitude of the air mobility, thus more accurately determining a position of the runway depending on the position or the altitude of the air mobility.

In addition, various effects ascertained directly or indirectly through the present disclosure may be provided.

Hereinabove, although the present disclosure has been described with reference to example embodiments and the accompanying drawings, the present disclosure is not limited thereto, but may be variously modified and altered by those skilled in the art to which the present disclosure pertains without departing from the spirit and scopes of the present disclosure claimed in the following claims.

Therefore, the example embodiments of the present disclosure are not intended to limit the technical spirit of the present disclosure, but are provided for illustrative purposes. Scopes of the present disclosure can be construed on the basis of the accompanying claims, and technical ideas within scopes equivalent to the claims can be included in scopes of the present disclosure.

**Claims**

1.  An apparatus comprising:

    a camera mounted on an air mobility and configured to obtain images for an area in front of the air mobility; and
    one or more processors connected with the camera; and
    a non-transitory storage medium storing computer-readable instructions that, when executed by the one or more processors, enable the one or more processors to:

    determine a flight status of the air mobility, based on flight phase information of the air mobility,
    obtain runway position information about a runway position of a runway for the air mobility from a first image obtained by the camera, in response to the flight status being an approach phase, and
    obtain centerline position information about a centerline position of a centerline of the runway from a second image obtained by the camera, in response to the flight status being a ground roll phase.

2.  The apparatus of claim 1, wherein the instructions further enable the one or more processors to distinguish between the approach phase and the ground roll phase based on whether the air mobility touches down on the runway.

3.  The apparatus of claim 1, wherein the instructions further enable the one or more processors to:

    transform the first image into a first bird's eye view (BEV) image; and
    determine a position error between the air mobility and a reference point of the runway for the air mobility, based on a coordinate error between a reference projection point corresponding to coordinates onto which a camera principal point is projected on the first BEV image and the reference point of the runway.

4.  The apparatus of claim 3, wherein the instructions further enable the one or more processors to transform the first image into the first BEV image based on at least one of or any combination of yaw of the air mobility, pitch of the air mobility, and roll of the air mobility.

5.  The apparatus of claim 3, wherein the instructions further enable the one or more processors to:

    obtain principal point coordinates of the camera on a heading coordinate system; and

determine the reference projection point on the first BEV image based on a coordinate point corresponding to the principal point coordinates of the camera on the heading coordinate system.

6. The apparatus of claim 5, wherein the instructions further enable the one or more processors to:

obtain a projection distance between the camera and the runway along a projection direction of the camera; and
obtain the principal point coordinates of the camera on the heading coordinate system, based on the projection distance and the camera principal point on an image coordinate system.

7. The apparatus of claim 3, wherein the instructions further enable the one or more processors to:

obtain a scale factor, based on an actual length of a runway starting line and an image length of the runway starting line on the first BEV image; and
determine an actual distance error between an extension line in a heading direction of the air mobility and a center point of the runway starting line based on the scale factor and the coordinate error.

8. The apparatus of claim 7, wherein the instructions further enable the one or more processors to determine the center point of the runway starting line as the reference point.

9. The apparatus of claim 3, wherein the instructions further enable the one or more processors to classify the runway on the first image, based on segmentation.

10. The apparatus of claim 1, wherein the instructions further enable the one or more processors to:

transform the second image into a second BEV image, based on a second image processing algorithm;
extract the centerline of the runway, the centerline being included in the second BEV image; and
represent the centerline of the runway on a coordinate axis of the second BEV image.

11. The apparatus of claim 10, wherein the instructions further enable the one or more processors to:

transform the second BEV image into a hue-saturation-value (HSV) image; and
extract the centerline of the runway from the HSV image.

12. A method for image recognition of a runway, the method comprising:

determining a flight status of an air mobility, based on flight phase information of the air mobility;
obtaining runway position information about a runway position of the runway for the air mobility from a first image obtained by a camera, wherein the camera is mounted on the air mobility, in response to the flight status being an approach phase; and
obtaining centerline position information about a centerline position of a centerline of the runway from a second image obtained by the camera, in response to the flight status being a ground roll phase.

13. The method of claim 12, wherein the obtaining of the runway position information comprises:

transforming the first image into a first bird's eye view (BEV) image;
determining a reference projection point corresponding to coordinates onto which a camera principal point is projected on the first BEV image; and
determining a position error between the air mobility and a reference point of the runway for the air mobility, based on a coordinate error between the reference projection point and the reference point of the runway.

14. The method of claim 13, wherein the determining of the reference projection point comprises:

obtaining principal point coordinates of the camera on a heading coordinate system; and
determining the reference projection point based on a coordinate point at which the principal point coordinates of the camera on the heading coordinate system is projected onto the first BEV image.

15. The method of claim 13, further comprising:

obtaining a scale factor, based on an actual length of a runway starting line and an image length of the runway starting line on the first BEV image; and

determining an actual distance error between an extension line in a heading direction of the air mobility and a center point of the runway starting line based on the scale factor in the coordinate error between the reference projection point and the reference point.

EP 4 571 712 A1

AIR MOBILITY
<u>AM</u>

APPARATUS FOR RECOGNIZING RUNWAY
<u>210</u>

CAMERA
<u>10</u>

IMAGE

BODY STATUS
INFORMATION

FLIGHT PHASE
INFORMATION

SENSOR DEVICE
<u>20</u>

ALTITUDE
INFORMATION

PROCESSOR
<u>30</u>

RUNWAY POSITION
INFORMATION

FCC
<u>50</u>

FIG.1

AM

RL

| Approach | | Ground roll |
|---|---|---|
| Level | Desent | |

Touch down

FIG.2

Touch Down

| FLIGHT PHASE INFORMATION | APPROACH PHASE | GROUND ROLL PHASE |
|---|---|---|

PROCESSOR

RECOGNIZE RUNWAY → EVALUATE POSITION OF RUNWAY → DETECT CENTERLINE OF RUNWAY → stop

GENERATE CONTROL SIGNAL

FIG.3

CAMERA(10)

INS(40)

FLIGHT PHASE SIGNAL

FLIGHT STATUS INFORMATION

PROCESSOR(30)

RECOGNIZE RUNWAY

Runway point, Synchronized aircraft state

[APPROACH PHASE] FIRST IMAGE PROCESSING ALGORITHM

FIRST PREPROCESSING → DETECT RUNWAY STARTING LINE

[GROUND ROLL PHASE] SECOND IMAGE PROCESSING ALGORITHM

SECOND PREPROCESSING → DETECT CENTERLINE OF RUNWAY → FUSION

FCC(50)

FIG.4

START

DETERMINE FLIGHT STATUS OF
AIR MOBILITY BASED ON FLIGHT PHASE INFORMATION ～S510

OBTAIN INFORMATION ABOUT POSITION OF
RUNWAY FROM FIRST IMAGE OBTAINED BY CAMERA,
BASED ON FIRST IMAGE PROCESSING ALGORITHM,
IN RESPONSE TO THAT FLIGHT STATUS IS APPROACH PHASE ～S520

OBTAIN INFORMATION ABOUT POSITION OF
RUNWAY FROM SECOND IMAGE OBTAINED BY CAMERA,
BASED ON SECOND IMAGE PROCESSING ALGORITHM,
IN RESPONSE TO THAT FLIGHT STATUS IS
GROUND ROLL PHASE ～S530

END

FIG.5

START

DIVIDE FLIGHT STATUS INTO APPROACH PHASE,
PHASE CHANGE INTERVAL, AND GROUND ROLL PHASE,
BASED ON FLIGHT PHASE INFORMATION — S610

OBTAIN FIRST POSITION INFORMATION ABOUT
RUNWAY POSITION BASED ON FIRST ALGORITHM,
IS APPROACH PHASE — S620

OBTAIN SECOND POSITION INFORMATION ABOUT
RUNWAY POSITION BASED ON SECOND ALGORITHM,
IS GROUND ROLL PHASE — S630

REFLECT FIRST WEIGHT IN FIRST POSITION INFORMATION TO
OBTAIN FIRST CORRECTION POSITION INFORMATION,
REFLECT SECOND WEIGHT IN SECOND POSITION INFORMATION TO
OBTAIN SECOND CORRECTION POSITION INFORMATION, AND
FUSE FIRST CORRECTION POSITION INFORMATION WITH
SECOND CORRECTION POSITION INFORMATION TO
DETERMINE POSITION OF RUNWAY, IN PHASE CHANGE INTERVAL — S640

END

FIG.6

Touch Down

| FLIGHT PHASE INFORMATION | APPROACH PHASE | PHASE CHANGE INTERVAL | GROUND ROLL PHASE |
|---|---|---|---|
| RUNWAY RECOGNITION ALGORITHM | FIRST ALGORITHM | FIRST ALGORITHM + SECOND ALGORITHM | SECOND ALGORITHM |

FIG. 7

$Y_B$

$\Theta(pitch)$

$\Phi(roll)$

$X_B$

$\Theta_C$

$\psi(yaw)$

$Z_B$

FIG.8

FIG.9

FIG.10

FIG.11A

$VP_0$

$VP_0$ = src 1
= src 2

src 3

src 4

Roll

FIG.11B

$VP_0 = VP_1$

VL

Φ

$VP_1$ = src 1
= src 2

src 4

src 3

Pitch

FIG.11C

$VP_2$

$VP_2$ = src 1
= src 2

src 4

src 3

FIG.12A

FIG.12B

FIG.13

FIG.14

FIG.15

Real world Frame

Width(m)

Heigth(m)

Width(m)

Image Frame

Width(m)

$P1(x_1, y_1)$

$P4(x_4, y_4)$

$P2(x_2, y_2)$

$P3(x_3, y_3)$

Width(m)

FIG.16

FIG.17A

FIG.17B

1000

1300

MEMORY

1310         1320

ROM         RAM

1100

PROCESSOR

1400

USER INTERFACE
INPUT DEVICE

1500

USER INTERFACE
OUTPUT DEVICE

1200

1600

STORAGE

1700

NETWORK
INTERFACE

FIG.18

Europäisches
Patentamt

European
Patent Office

Office européen
des brevets

# EUROPEAN SEARCH REPORT

**Application Number**

EP 24 19 9994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/315242 A1 (LIU YANG [CN] ET AL) 6 October 2022 (2022-10-06) * abstract * * paragraphs [0007] - [0008], [0033] - [0034] * | 1-15 | INV. G08G5/21 G08G5/51 G08G5/54 G08G5/55 |
| X | US 2023/023069 A1 (GARIEL MAXIME [US] ET AL) 26 January 2023 (2023-01-26) * abstract; figures 1, 3 * * paragraphs [0004], [0025] - [0026], [0030], [0034], [0045] - [0046] * | 1-15 | |
| X | US 2022/198703 A1 (EVANS NICK S [US] ET AL) 23 June 2022 (2022-06-23) * abstract * * paragraphs [0005] - [0008], [0028] - [0029], [0034], [0037], [0056] - [0058] * | 1-15 | |

**TECHNICAL FIELDS SEARCHED (IPC)**

G08G

The present search report has been drawn up for all claims

| Place of search | Date of completion of the search | Examiner |
|---|---|---|
| The Hague | 4 March 2025 | Berland, Joachim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 9994

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | Publication date | Patent family member(s) | Publication date |
|---|---|---|---|
| US 2022315242 A1 | 06-10-2022 | EP 4068041 A1<br>US 2022315242 A1 | 05-10-2022<br>06-10-2022 |
| US 2023023069 A1 | 26-01-2023 | NONE | |
| US 2022198703 A1 | 23-06-2022 | US 2022198703 A1<br>US 2025069262 A1 | 23-06-2022<br>27-02-2025 |

EPO FORM P0459

For more details about this annex : see Official Journal of the European Patent Office, No. 12/82

**EP 4 571 712 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230181269